# EUROPEAN PATENT APPLICATION

(11) **EP 1 164 319 A2**
(43) Date of publication of application: **19.12.2001**
(21) Application number: 01114380.7
(22) Date of filing: 13.06.2001
(51) Int. Cl.: F16J 15/32

(54) **Lip type seal device**

(30) Priority: 16.06.2000 JP 2000180779
(71) Applicant: Kabushiki Kaisha Toyota Jidoshokki, Kariya-shi, Aichi-ken (JP)
(72) Inventor: Yamada,Takeshi, K.K.Toyoda Jidoshokki Seisakusho, Kariya-shi, Aichi-ken (JP); Yokomachi,Naoya, K.K.Toyoda Jidoshokki Seisakusho, Kariya-shi, Aichi-ken (JP); Imai,Takayuki, K.K. Toyoda Jidoshokki Seisakusho, Kariya-shi, Aichi-ken (JP)
(74) Representative: Leson, Thomas Johannes Alois, Dipl.-Ing.

(57) **Abstract**

A lip type seal device (1) for a rotary shaft seals about the rotary shaft (8) between a high pressure inner zone (A) and a low pressure outer zone (B). The lip type seal device (1) includes a first seal (2), a second seal (5). The first seal is arranged adjacent to high pressure side (A), and the second seal (5) is arranged at low pressure side (B) of the first seal (2). The first seal (2) and the second seal (5) contact an outer peripheral surface of the rotary shaft (8), and seal about the rotary shaft. The lip front end (11) of the first seal (2) is supported by a bending portion of a support ring (4). The lip front end (11) of the first seal (2) is also supported by the back-up portion (30) arranged in a space between the lip front end (11) of the first seal (2) and the lip front end of the second seal (5). Therefore, the bending portion (23) and the back-up portion (30) prevents the lip front end (11) of the first seal (2) from bending or depressed by the high pressure inner zone (A), while the rotation of the rotary shaft (8) is stopped. Accordingly, lubricant oil stored in the space is prevented from being extruded to the low pressure side (B).

## Description

### BACKGROUND OF THE INVENTION

The present invention relates to a lip type seal device sealing an outer peripheral surface of a rotary shaft in a compressor for use in, for example, an air conditioner.

In prior arts, representative examples with respect to lip type seals are disclosed in Japanese Examined Utility Model Publication No. 2-47311 and Japanese Unexamined Patent Publication No. 7-139634.

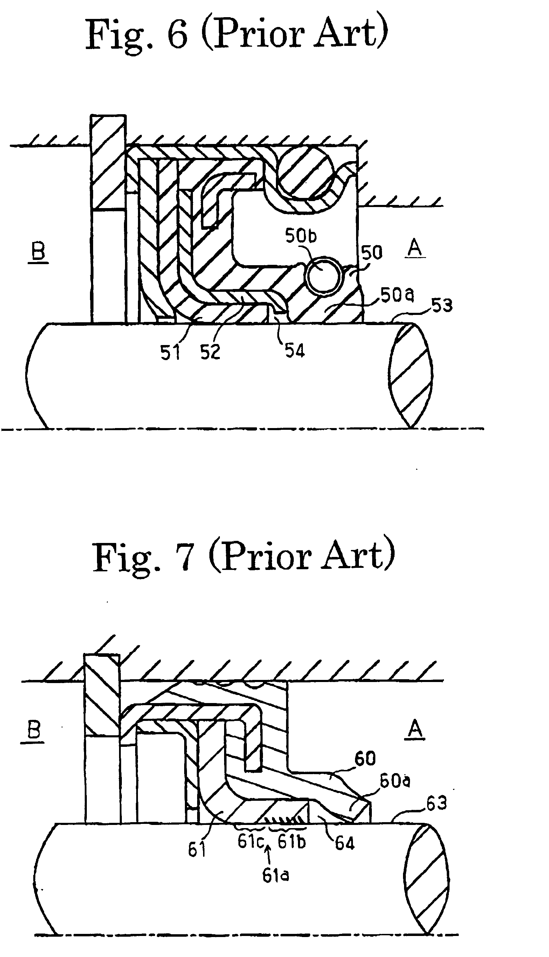

A lip type seal device according to Japanese Examined Utility Model Publication No. 2-47311 will be described with reference to Fig. 6. The lip type seal device has a first seal 50, a second seal 51 and a reinforcement member 52. The first seal 50, which is made of elastic material such as rubber, is arranged at a high pressure A side. The second seal 51, which is made of synthetic resin, is arranged at a low pressure B side of the first seal 50. The reinforcement member 52 as a back-up ring is arranged between the first seal 50 and the second seal 51, and supports the first seal 50. A spring 50b is mounted around a lip front end 50a of the first seal 50 so that the lip front end 50a is press-contacted against the outer peripheral surface 53 of a rotary shaft by the spring 50b. Accordingly, the first and second seal 50, 51 constitute a dual seal structure.

While the rotary shaft rotates, however, abrasion and heat tend to generate because of the press-contact between the lip front end 50a and the outer peripheral surface 53 of the rotary shaft. To solve the above problem, the press-contact caused by the spring 50b is weakened. As the pressure in the high pressure inner zone A becomes high, oil in the zone A tends to leak into a space 54 which is defined by the first seal 50, the second seal 51, the reinforcement member 52 and the outer peripheral surface 53 of the rotary shaft. Accordingly, the oil stored in the space 54 is leaked to the low pressure B side through a sliding surface between the second seal 51 and the outer peripheral surface of the rotary shaft.

To improve the above problem, a lip type seal device according to Japanese Unexamined Patent Publication No. 7-139634 is disclosed. As shown in Fig. 7, the lip type seal device has a first seal 60 and a second seal 61. The first seal 60, which is made of elastic material such as rubber, is arranged adjacent to a high pressure inner zone A. The second seal 61, which is made of synthetic resin, is arranged at a low pressure B side of the first seal 60.

A lip front end 60a of the first seal 60 slides on an outer peripheral surface 63 of a rotary shaft. The lip front end 60a, a lip front end of the second seal 61 and the outer peripheral surface 63 defines a space 64. A sliding surface 61a of the second seal 61 has a spiral groove 61b which extends spirally about an axis of the second seal 61, and a flat portion 61c. While the rotary shaft is rotated, the spiral groove 61b functions as a pump to return oil in the groove 61b to the high pressure A side. Therefore, even if the oil leaks into the spiral groove 61b from the high pressure inner zone A through the space 64, the spiral groove 61b can return the oil to the space 64 side. On the other hand, while the rotation of the rotary shaft is stopped, contact between the flat portion 61c and the outer peripheral surface 63 prevents the oil from leaking to the low pressure B side. In a sealing ability test, a satisfactory effect is obtained as follows. While rotation of a rotary shaft is stopped, if room temperature is at normal temperature or 70 centigrade (°C) and pressure is 5.0 to 21.8 kilogram force per centimeter squared (kgf/cm²), oil does not leak between the flat portion 61c and the outer peripheral surface 63.

In general, a compressor for use in a vehicle air conditioner is arranged in an engine room, and is operated by drive force of the engine. While the compressor is operated, at least while the engine is rotated, heated air in the engine room is exhausted outside the engine room by the rotation of a fan of a radiator. Therefore, the temperature in the engine room is kept properly. However, when the rotation of the engine is stopped in summer, immediately after the engine is rotated at a high speed, the temperature in the engine room becomes more than 80 °C. For the engine in high temperature radiates heat, and a bonnet is directly exposed to sunlight. The compressor is also exposed under this condition. Accordingly, the pressure of the refrigerant at the high pressure A side rises rapidly.

Especially, carbon dioxide as a refrigerant, which requires high pressure, may be 30 to 120 kgf/cm² in pressure. As shown in Fig. 7, the lip front end 60a of the first seal 60 is bent toward the low pressure B side by the high pressure, and lubricant oil stored in the space 64 is extruded to the second seal 61 side. At this time, the spiral groove 61b does not function as a pump to return the lubricant oil because the rotation of the rotary shaft is stopped. On the other hand, the high pressure exceeds in predetermined pressure in the sealing ability test. Therefore, the contact between the flat portion 61c and the outer peripheral surface 63 is not kept. Accordingly, the lubricant oil leaks to the low pressure B side through the sliding surface 61a.

### SUMMARY OF THE INVENTION

The object of the present invention is to provide a lip type seal device which prevents lubricant oil from leaking to low pressure side through a space between a sliding surface of a second seal and an outer peripheral surface of a rotary shaft.

To achieve the above object, the present invention has a lip type seal device for a rotary shaft. The seal device seals about the rotary shaft between a high pressure inner zone and a low pressure outer zone. Lubricant oil is included in the high pressure zone. The seal device includes a first seal, and a second seal, a first support portion and a second support portion. The first seal, which is made of elastic material, has a front end. The front end of the first seal slides on an outer peripheral surface of the rotary shaft. The front end of the first seal also faces the high pressure side. The second seal, which is made of synthetic resin, has a front end. The second seal slides on the outer peripheral surface of the rotary shaft. The second seal includes a spiral groove formed on a sliding surface thereof. The second seal is located on the low pressure side of the first seal. The front end of the second seal faces high pressure side. The first support portion supports a bending portion of a lip front end of the first seal. The second support portion supports the lip front end of said first seal.

Thus, even while the rotation of the rotary shaft is stopped and the pressure of the high pressure side is high, a rear surface of the lip front end of the first seal is securely supported by the first and second support rings, which prevents the lip front end from bending or depressed to the low pressure side. Accordingly, oil stored in a space between the lip front end of the first seal and the lip front end of the second seal is not extruded to the low pressure side. That is, the lip type seal device according to the present invention can prevent the lubricant oil from leaking to the low pressure side through the sliding surface of the second seal.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
Fig. 1 is a semi cross-sectional side view illustrating a lip type seal device according to a first embodiment;
Fig. 2 is a semi cross-sectional side view illustrating a lip type seal device according to a modification of the first embodiment;
Fig. 3 is a semi cross-sectional side view illustrating a lip type seal device according to a second embodiment;
Fig. 4 is a semi cross-sectional side view illustrating a lip type seal device according to a modification of the second embodiment;
Fig. 5 is a semi cross-sectional side view illustrating a lip type seal device according to a third embodiment;
Fig. 6 is a semi cross-sectional side view illustrating a lip type seal device according to a prior art; and
Fig. 7 is a semi cross-sectional side view illustrating a lip type seal device according to another prior art.

### DETAILED DESCRIPTION OF THE PREFERRED EMBODIMENTS

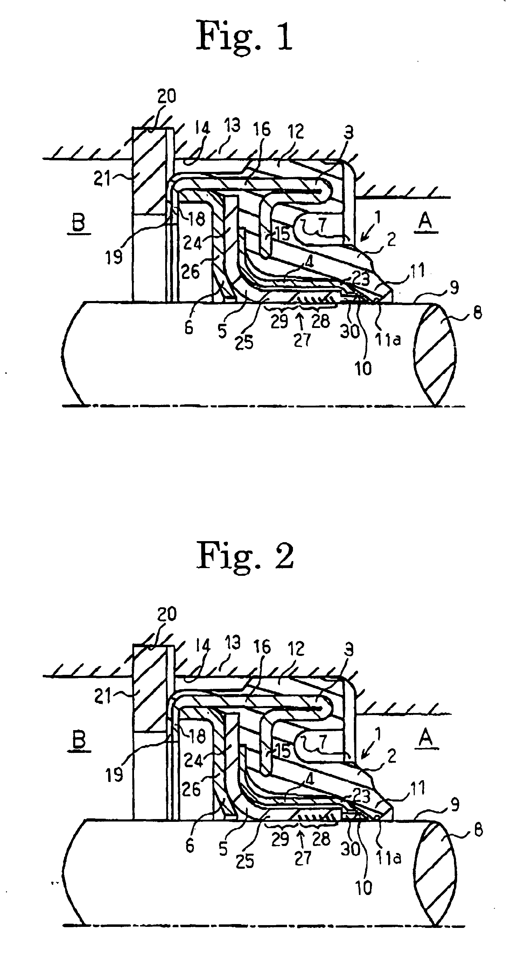

Lip type seal devices according to embodiments of the present invention will now be described, referring to Figs. 1 to 5. In the following description, a "front" denotes an aspect facing a high pressure inner zone A, and a "rear" denotes an aspect facing a low pressure outer zone B. In addition, a "front end" denotes an end at the high pressure A side, and a "rear end" denotes an end at an the low pressure B side.

### A first embodiment

A lip type seal device according to a first embodiment of the present invention will now be described, referring to Fig. 1. A lip type seal device 1 includes an annular first seal 2 made of an elastic material such as rubber, an outer ring 3 embedded in the first seal 2, a support ring 4 which supports the first seal 2, an annular second seal 5 made of synthetic resin which is at the rear of the support ring 4, and an inner ring 6 supporting the rear of the second seal 5.

The first seal 2 has a lip front end 11. The lip front end 11 is formed to bend obliquely from a front of a base 7 toward an outer peripheral surface 9 of a rotary shaft 8. A lip contact portion 11a of the lip front end 11 slidably press-contacts the outer peripheral surface 9 of the rotary shaft 8. On the other hand, a mounting portion 12 of the first seal 2 press-contacts an inner peripheral surface 14 of a housing 13. A flange 15 and an axial extending portion 16 of the outer ring 3 are integrally formed so that its cross-sectional shape is T-shaped, and functions as a core bar of the base 7 and the mounting portion 12 of the first seal 2. A rear end of the axial extending portion 16 is bent so that its cross-sectional shape is L-shaped. A fastener 18, which is bent toward an axis of the rotary shaft 8, is formed. The fastener 18 abuts a clamp ring 21 through a cover portion 19 extending from the mounting portion 12. That is, the clamp ring 21 is fitted in an annular groove 20 formed in the housing 13, and the cover portion 19 abuts the clamp ring 21. Thus, the lip type seal device 1 is positioned in the housing 13.

The support ring 4 is made of metallic material, and is arranged at the rear of the first seal 2. The support ring 4 has a bending portion 23 as a first support portion, which is bent toward the rotary shaft 8, on a front end. Because the bending portion 23 abuts the rear surface of the lip front end 11 of the first seal 2, the bending portion 23 prevents the first seal 2 from bending or depressed in the vicinity of the abutting portion by pressure at the high pressure A side. Because the bending portion 23 also positions a bending portion of the lip front end 11, and is inclined to come close to the rotary shaft 8, the bending portion 23 functions so that the lip contact portion 11a abuts the rotary shaft 8 by proper pressing force. That is, the press-contacting force between the lip contact portion 11a and the outer peripheral surface 9 of the rotary shaft 8 is determined by regulating a dimension between the abutting portion and the outer peripheral surface 9 of the rotary shaft 8, in a state that the rotary shaft 8 is inserted through the lip type seal device 1 and the rotary shaft 8 is rotated, considering pressure change at the high pressure A side. In this case, the rotary shaft 8 is properly sealed, while a proper quantity of lubricant oil is leaked to the high pressure A side through the lip contact portion 11a by returning the oil by a spiral groove 28.

The second seal 5 is arranged at the rear of the support ring 4. The second seal 5 is made of synthetic resin such as polytetrafluoroethylene or PTFE, and its cross-sectional shape is formed to be L-shaped by a radial extending portion 24 and a sliding portion 25. The radial extending portion 24 extends to approach the axial extending portion 16 of the outer ring 3. A front surface of the radial extending portion 24 contacts the rear surface of the first seal 2 and the rear surface of the support ring 4. A rear surface of the radial extending portion 24 contacts a front surface of a flange 26 of the inner ring 6. A sliding portion 25 has a sliding surface 27 which contacts the outer peripheral surface 9 of the rotary shaft 8. The sliding surface 27 has the spiral groove 28 and a flat portion 29. A front end of the sliding portion 25 and the rear surface of the lip front end 11 defines a space 10.

A back-up portion 30, made of synthetic resin, as a second support portion which supports the first seal 2, is formed integrally with a front end of the second seal 5. The back-up portion 30 extends in the space 10 to approach the high pressure A side, and is adjacent to the outer peripheral surface 9 of the rotary shaft 8 and to the rear surface of the lip front end 11 of the first seal 2. A front end of the back-up portion 30 has an inclined plane. The inclined angle of the front end of the back-up portion 30 is nearly equal to that of the rear surface of the lip front end 11.

The operation of the embodiment will now be described.

The lip type seal device 1 is positioned and fixed in the compressor so that the mounting portion 12 is press-contacted by the inner peripheral surface 14 of the housing 13 and the clamp ring 21. In this state, the rotary shaft 8 is inserted into the lip type seal device 1. At this time, the dimension of the lip front end 11 is regulated by the bending portion 23 of the support ring 4, so that the first seal 2 press-contacts the outer peripheral surface 9 of the rotary shaft 8 properly.

When the compressor is operated, a proper quantity of lubricant oil leaks into the space 10 through between the lip contact portion 11a and the rotary shaft 8 by the pressure change at the high pressure A side. However, the oil returns into the space 10 because the spiral groove 28 functions as a pump by the rotation of the rotary shaft 8. The oil stored in this space 10 further flows to be stored in a space adjacent to the rear surface of the support ring 4. This flow of the oil contributes to the lubrication between the sliding surface 27, the lip contact portion 11a and the outer peripheral surface 9 of the rotary shaft 8.

When the compressor is stopped, refrigerant pressure in the high pressure A rises, and the spiral groove 28 does not return the oil to the high pressure A side. The lip front end 11 is bent or depressed by the pressure in the high pressure inner zone A. Therefore, the oil in the space 10 is being extruded to the low pressure B side. In this embodiment, however, the back-up portion 30 is adjacent to the rear surface of the lip front end 11, and the back-up portion 30 prevents the lip front end 11 from bending or depressed. Accordingly, the oil in the space 10 remains inside the space.

The following advantages are obtained from the lip type seal device of the preferred embodiment.
(1) The bending portion 23 of the support ring 4 and the back-up portion 30 formed on the front end of the second seal 5 retains the rear surface of the lip front end 11 of the first seal 2. Therefore, the lip front end 11 does not bend to the low pressure B side, even when high pressure acts on the high pressure A side of the lip front end 11 while the rotation of the rotary shaft is stopped. Accordingly, the lubricant oil does not leak to the low pressure B side through between the sliding portion 27 of the second seal 5 and the outer peripheral surface 9 of the rotary shaft 8.
(2) The back-up portion 30 is formed on the front end of the second seal 5, and is arranged at the rear of the first seal 2. Therefore, the back-up portion 30 is formed to extend from the second seal 5. The rear surface of the lip front end 11 of the first seal 2 is simply retained.
(3) The inclination angle of the front end of the back-up portion 30 is nearly equal to that of the rear surface of the lip front end 11. Accordingly, the rear surface of the lip front end 11 is closely received by the surface of the back-up portion 30.
(4) The back-up portion 30 is made of synthetic resin, while metallic material is difficult to form finely. Accordingly, the front end of the back-up portion 30 is easily formed to fit the inclination angle of the rear surface of the lip front end 11.
(5) The back-up portion 30 is accommodated in the space 10, and the volume of the space 10 is reduced. Accordingly, the lubricant oil in the space 10 is also reduced.

### A second embodiment

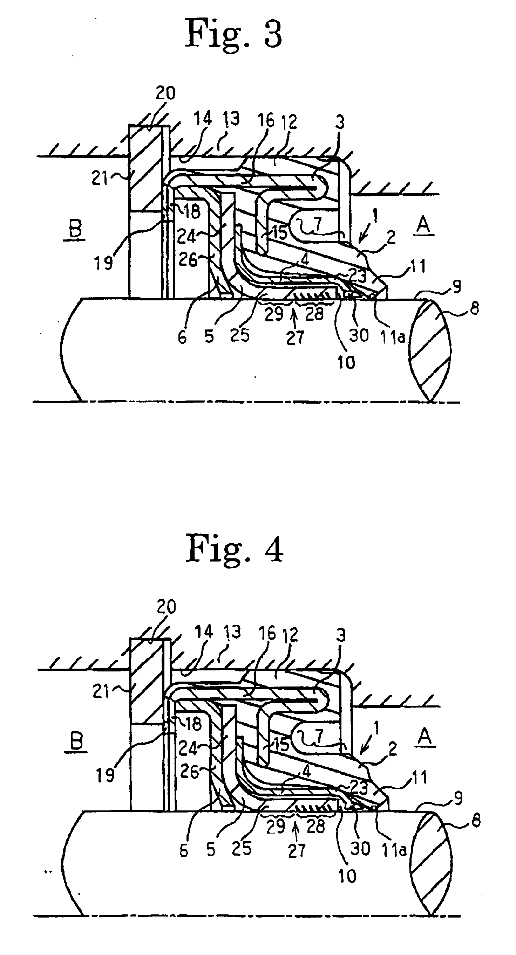

A lip type seal device according to a second embodiment of the present invention will now be described, referring to Fig. 3. In this embodiment, the same reference numerals as the first embodiment are given to the components which are common to the first embodiment, and the overlapped description is omitted. Accordingly, the different points from the first embodiment are mainly explained.

The support ring 4 has the bending portion 23 as a first support portion, which is bent toward the rotary shaft 8, on a front end. A back-up portion 30 as a second support portion, is made of synthetic resin and located on the front end of a support ring 4 so as to support the first seal 2. The back-up portion 30 is adjacent to the rear surface of the lip front end 11 of the first seal 2 and the outer peripheral surface 9 of the rotary shaft 8. The inclination angle of the front end surface of the back-up portion 30 is nearly equal to that of the rear surface of the lip front end 11. Accordingly, the rear surface of the lip front end 11 is closely supported by the back-up portion 30.

The back-up portion 30 of the embodiment also functions in the same way as the first embodiment. Accordingly, the following advantages are obtained from the lip type seal device of the second embodiment, including the advantages according to the first embodiment.

The bending portion 23 as the first support portion supports the rear surface of the lip front end 11, and regulates press-contacting force against the outer peripheral surface 9 of the rotary shaft 8. The back-up portion 30 is formed on the front end of the bending portion 23 to support the rear surface of the lip front end 11 while the compressor is stopped. Accordingly, the relative position between the bending portion 23 and the back-up portion 30 is easily determined.

The present invention may be applied as described below without departing from the spirit or scope of the invention.

In the first embodiment, the back-up portion 30 does not need to be formed integrally with the second seal 5. As shown in Fig. 2, a back-up portion 30 which is formed separately from the second seal 5 may be attached to the second seal 5. In this case, freedom of shape and dimension increases, independent of the shape of the second seal 5 made of synthetic resin.

In the second embodiment, the back-up portion 30 may be formed integrally with the support ring 4 as shown in Fig. 4. At this time, the relative position between the bending portion 23 and the back-up portion 30 is effectively regulated.

### A third embodiment

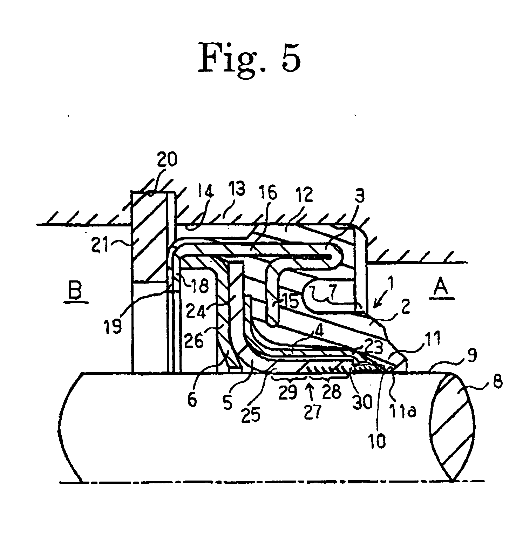

In the first or second embodiment, the back-up portion 30 is not adjacent to the outer peripheral surface 9 of the rotary shaft 8, but may contact the outer peripheral surface 9. Furthermore, the spiral groove 28 may be formed on a sliding surface of the back-up portion 30 to function as a pump as shown in Fig. 5. At this time, the back-up portion 30 functions as an auxiliary seal of the sliding portion 27 of the second seal 5. Therefore, sealing ability is further improved.

As described above, the rear surface of the first seal 2 is supported securely, while the rotation of the rotary shaft is stopped. Therefore, even in high pressure, the lip front end is not bent toward the low pressure B side, and the oil stored in the space is not extruded to the low pressure B side. Accordingly, the lip type seal device according to the present invention prevents the lubricant oil from leaking into the low pressure B side through the sliding surface of the second seal.

The present examples and embodiments are to be considered as illustrative and not restrictive and the invention is not to be limited to the details given herein but may be modified within the scope of the appended claims.

A lip type seal device for a rotary shaft seals about the rotary shaft between a high pressure inner zone and a low pressure outer zone. The lip type seal device includes a first seal, a second seal. The first seal is arranged adjacent to high pressure side, and the second seal is arranged at low pressure side of the first seal. The first seal and the second seal contact an outer peripheral surface of the rotary shaft, and seal about the rotary shaft. The lip front end of the first seal is supported by a bending portion of a support ring. The lip front end of the first seal is also supported by the back-up portion arranged in a space between the lip front end of the first seal and the lip front end of the second seal. Therefore, the bending portion and the back-up portion prevents the lip front end of the first seal from bending or depressed by the high pressure inner zone, while the rotation of the rotary shaft is stopped. Accordingly, lubricant oil stored in the space is prevented from being extruded to the low pressure side.

## Claims

1. A lip type seal device for a rotary shaft, wherein the seal device seals about the rotary shaft between a high pressure inner zone and a low pressure outer zone, and wherein lubricant oil is included in the high pressure zone, the seal device comprising:
a first seal, which is made of elastic material, having a front end, wherein the front end of said first seal slides on an outer peripheral surface of the rotary shaft, and wherein the front end of said first seal faces the high pressure side;
a second seal, which is made of synthetic resin, having a front end, wherein said second seal slides on the outer peripheral surface of the rotary shaft, wherein said second seal includes a spiral groove formed on a sliding surface thereof, wherein said second seal is located on the low pressure side of said first seal, and wherein the front end of said second seal faces high pressure side;
a first support portion, which supports a bending portion of a lip front end of said first seal; and
a second support portion, which supports the lip front end of said first seal.

2. The lip type seal device according to the claim 1, wherein said first support portion is a support ring, and wherein said second support portion is a back-up portion, and wherein said first support portion and said second support portion are located between said first seal and said second seal.

3. The lip type seal device according to the claim 2, wherein the support ring has the bending portion which supports the lip front end of the said first seal.

4. The lip type seal device according to the claim 3, wherein the bending portion of the support ring has a inclined surface whose shape corresponds to the bending portion of the lip front end.

5. The lip type seal device according to the claim 2, wherein the support ring is made of metallic material and the back-up portion is made of synthetic resin.

6. The lip type seal device according to the claim 1, wherein said second support portion slides on the outer peripheral surface of the rotary shaft, and wherein said second support portion includes a spiral groove formed on a sliding surface thereof.

7. The lip type seal device according to the claim 1, wherein the second support portion is formed integrally with said second seal.

8. The lip type seal device according to the claim 1, wherein the second support portion is formed separately from said second seal.

9. The lip type seal device according to the claim 1, wherein the second support portion is formed separately from the first support portion.

10. The lip type seal device according to the claim 1, wherein the second support portion is formed integrally with the first support portion.

11. A compressor having a lip type seal device, wherein the compressor includes:
a housing;
a crank chamber having a high pressure zone containing lubricant oil within said housing;
a rotary shaft extending from an outside of the compressor to said crank chamber;
a cam plate, which is inclinable with respect to said rotary shaft and which rotates integrally with said rotary shaft;
a cylinder bore;
a piston located within said cylinder bore, wherein said piston is connected to said cam plate, and wherein the pressure in said crank chamber is varied to control the inclination of said cam plate and the displacement of the compressor, wherein the lip type seal device comprising:
a first seal, which is made of elastic material, having a front end, wherein the front end of said first seal slides on an outer peripheral surface of the rotary shaft, and wherein the front end of said first seal faces the high pressure side;
a second seal, which is made of synthetic resin, having a front end, wherein said second seal slides on the outer peripheral surface of the rotary shaft, wherein said second seal includes a spiral groove formed on a sliding surface thereof, wherein said second seal is located on the low pressure side of said first seal, and wherein the front end of said second seal faces high pressure side;
a first support portion, which supports a bending portion of a lip front end of said first seal; and
a second support portion, which supports the lip front end of said first seal.
